**Europäisches Patentamt**

**European Patent Office**

**Office européen des brevets**

(19)

(11) Veröffentlichungsnummer : **0 162 939**
**B1**

(12)

# EUROPÄISCHE PATENTSCHRIFT

(45) Veröffentlichungstag der Patentschrift :
**11.11.87**

(21) Anmeldenummer : **84106134.4**

(22) Anmeldetag : **29.05.84**

(51) Int. Cl.⁴ : **F 02 M 31/12//** F02M37/22,
B01D35/18, H05B3/14

(54) **Heizeinrichtung für den Dieselkraftstoff eines Verbrennungsmotors.**

(43) Veröffentlichungstag der Anmeldung :
**04.12.85 Patentblatt 85/49**

(45) Bekanntmachung des Hinweises auf die Patenterteilung : **11.11.87 Patentblatt 87/46**

(84) Benannte Vertragsstaaten :
**DE FR IT SE**

(56) Entgegenhaltungen :
**EP-A- 0 051 936**
**DE-A- 3 042 420**
**US-A- 4 406 785**

(73) Patentinhaber : **DAVID + BAADER - DBK - Spezialfabrik Elektrischer Apparate und Heizwiderstände -
GmbH**
**Rheinstrasse 72-74**
**D-6744 Kandel/Pfalz (DE)**

(72) Erfinder : **Bohländer, Franz**
**Jahnstrasse**
**D-6744 Kandel/Pfalz (DE)**
Erfinder : **Buchlaub, Norbert**
**Konrad-Adenauer-Ring 19**
**D-6729 Hagenbach (DE)**

(74) Vertreter : **Patentanwälte Grünecker, Dr. Kinkeldey,
Dr. Stockmair, Dr. Schumann, Jakob, Dr. Bezold,
Meister, Hilgers, Dr. Meyer-Plath**
**Maximilianstrasse 58**
**D-8000 München 22 (DE)**

EP 0 162 939 B1

**Beschreibung**

Die vorliegende Erfindung bezieht sich auf eine Heizeinrichtung nach dem Oberbegriff des Anspruchs 1.

Um bei Dieselmotoren den Kaltstart zu erleichtern, sind Heizeinrichtungen entwickelt worden, mit denen der Dieselkraftstoff beim Start des Motors elektrisch aufgeheizt wird. Diese Heizeinrichtungen sind gewöhnlich im Einlaßbereich des Kraftstoff-Filters vorgesehen. Eine solche Heizeinrichtung ist beispielsweise aus der US-A-4 406 785 bekannt. Sie besteht aus zwei gut wärmeleitenden ringförmigen Kontaktplatten, zwischen denen scheibenförmige PTC-Elemente angeordnet sind, die als temperaturabhängiger elektrischer Widerstand dienen. Um eine gute elektrische Kontaktgabe zwischen den als elektrische Elektroden dienenden Kontaktplatten und den PTC-Elementen sicherzustellen, ist zwischen die PTC-Elemente und eine der Kontaktplatten ein Federring eingebettet, der sich an der Kontaktplatte und den PTC-Elementen mit ausgebogenen Federkrallen abstützt. Eine weitere ähnliche Heizvorrichtung ist aus der US-A-4 387 691 bekannt. Diese bekannten Heizeinrichtungen leiden an dem Nachteil, daß der Wärmeübergang von den PTC-Elementen nur zu der einen Kontaktplatte, auf denen sie unmittelbar aufliegen, gut ist und die andere Kontaktplatte, die von dem PTC-Elementen durch die Federeinrichtung getrennt ist, nur mäßig ist. Außerdem reagieren die PTC-Elemente sehr empfindlich auf die scharfen Kanten der Feder-Elemente und können durch auf temperaturbedingte Verschiebebewegungen und Stoßbelastungen, wie sie an Motoren und in Kraftfahrzeugen üblich sind, Schaden leiden.

Der vorliegenden Erfindung liegt die Aufgabe zugrunde, eine Heizeinrichtung der eingangs genannten Art anzugeben, die eine verbesserte Wärmeübertragung gewährleistet.

Diese Aufgabe wird ausgehend vom Oberbegriff des Anspruchs 1 durch die kennzeichnenden Merkmale dieses Anspruchs gelöst.

Durch die unmittelbare Einbettung der PTC-Elemente zwischen die beiden wärmeübertragenden Kontaktplatten ohne eine dazwischenliegende Federeinrichtung wird ein guter Wärmeübergang von den PTC-Elementen auf die Kontaktplatten sichergestellt. Dadurch, daß die PTC-Elemente mit einem Mittelloch ausgebildet sind, das von einem Haltestift durchsetzt ist, sind sie gegen Verschiebungen gesichert, so daß die Kontaktplatten auf ihrer gesamten Fläche eben ausgebildet werden können und nicht, wie beispielsweise bei der Ausführungsform nach der US-PS 4 387 691 in muldenförmigen Vertiefungen anzuordnen sind, die die Kontaktgabe beeinflussen. Die PTC-Elemente liegen mit ihrer gesamten Fläche bündig an den Kontaktplatten an, wodurch ihre empfindlichen Oberflächen auch bei starken Temperaturänderungen und Stößen ausreichend geschützt sind. Ein weiterer ganz entscheidender Vorteil der vorliegenden Heizeinrichtung gegenüber bekannten Heizeinrichtungen liegt darin, daß das Volumen zwischen den Kontaktplatten sehr niedrig liegt, wodurch die Heizeinrichtung bereits wenige Sekunden nach ihrem Einschalten Dieselkraftstoff mit ausreichender Temperatur zur Verfügung stellt. Sie spricht also sehr schnell an, wodurch das Kaltstartverhalten wesentlich verbessert wird.

Bevorzugte Weiterbildungen ergeben sich aus den Unteransprüchen.

Nicht einfach zu handhaben ist bei den vorliegenden Heizeinrichtungen die Stromversorgung der PTC-Elemente. In der bevorzugten Weiterbildung nach Anspruch 2 sind die elektrischen Kontakte unmittelbar aus dem Material der Kontaktplatten geformt. Dies führt zu einer sehr einfachen Konstruktion, die darüberhinaus elektrisch sehr zuverlässig ist.

Der Gegenstand des Anspruchs 3, der eine Weiterbildung des Anspruchs 2 darstellt, führt zu einer stoßunempfindlichen Halterung der elektrischen Kontakte.

Die im Anspruch 4 angegebene Federeinrichtung führt zu einem gleichmäßigen Anpreßdruck der Kontaktplatten an die PTC-Elemente.

Anspruch 5 beinhaltet eine einfache Ausführungsform der Federeinrichtung.

Anspruch 6 gibt, insbesondere zusammen mit Anspruch 5 eine einfache und sichere Halterung sämtlicher Einzelteile der Heizeinrichtung an.

Anhand eines in der Zeichnung dargestellten bevorzugten Ausführungsbeispiels wird die Erfindung im folgenden näher erläutert.

Es zeigen :

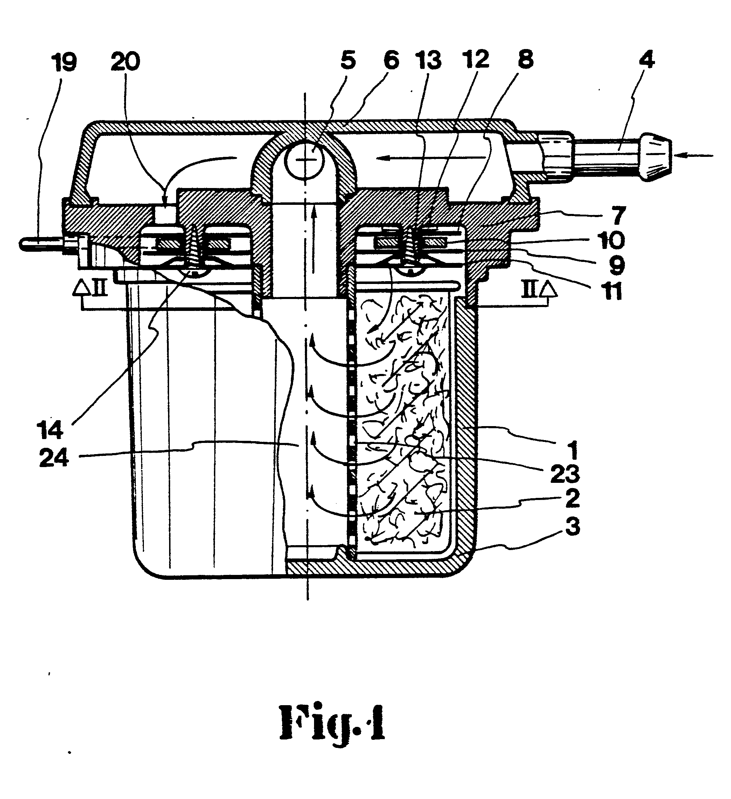

Fig. 1 einen Längsschnitt durch ein Dieselkraftstoff-Filter mit darin integrierter Heizeinrichtung ;

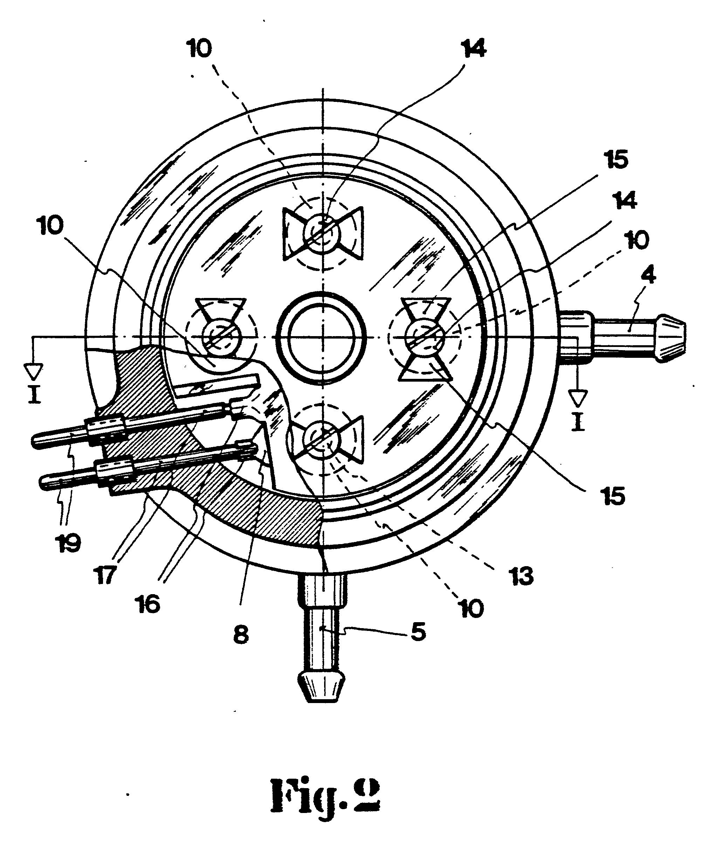

Fig. 2 eine Draufsicht auf die Heizeinrichtung nach Fig. 1, und

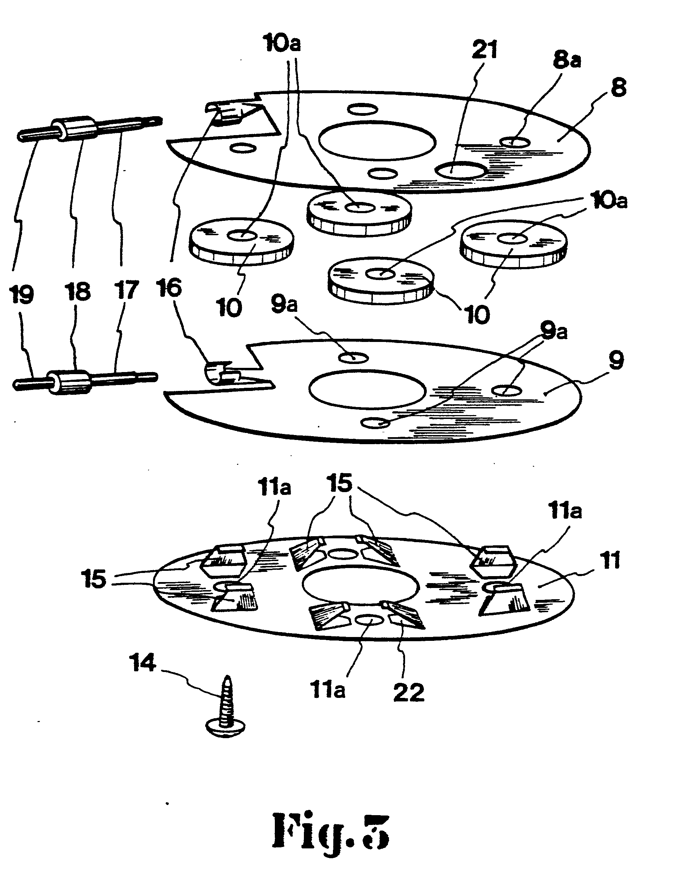

Fig. 3 eine Explosionsdarstellung der Heizeinrichtung nach den Fig. 1 und 2.

Bei dem dargestellten Ausführungsbeispiel ist die Heizeinrichtung in ein Kraftstoff-Filter integriert. Das Filter besteht aus einem Gehäuse 1, in das eine Filterpatrone 2 in ein abnehmbares Unterteil 3 eingesetzt ist. Die Kraftstoffzuleitung 4 und der Kraftstoffauslaß 5 sitzen in einem Deckel 6, der auf dem oberen Teil des Gehäuses 1 befestigt ist. Das Mittelteil 7 des Gehäuses 1 weist eine ringförmige Ausnehmung auf, in der die Heizeinrichtung liegt. Sie besteht aus einer oberen Kontaktplatte 8, einer unteren Kontakplatte 9, vier dazwischen angeordneten PTC-Elementen 10 und einer Federscheibe 11. In der ringförmigen Ausnehmung des Mittelteils 7 des Gehäuses 1 sind vier um jeweils 90° gegeneinander versetzte Anschläge 12 vorgesehen, aus denen Haltestifte 13 herausragen, in die Schrauben 14 eingesetzt sind. Die obere Kontakplatte 8, die untere Kontaktplatte 9, alle vier PTC-Elemente 10 und die Federscheibe 11 weisen Öffnungen 8a, 9a, 10a und 11a auf, durch die die Haltestifte 13 treten. Die obere Kontaktplatte 8 liegt auf den Anschlägen 12 auf.

Auf ihr liegen die vier PTC-Elemente 10, an die sich die untere Kontaktplatte 9 anschließt. Die Federscheibe 11, die durch die Schrauben 14 auf die Haltestifte 13 gedrückt wird, weist benachbart zu jeder ihrer Durchgangsöffnungen, die von den Haltestiften 13 durchsetzt ist, jeweils zwei nach oben ragende Ausbiegungen 15 auf, die die beiden Kontakplatten 8 und 9 und die PTC-Elemente fest miteinander verspannen. Dabei ist die Federscheibe 11 durch die Schrauben 14 fest auf die Stirnfläche der Haltestifte 13 aufgeschraubt, wodurch sie eine definierte Lage erhält und der Anpreßdruck der Kontaktplatten 8 und 9 und der dazwischenliegenden PTC-Elemente 10 lediglich durch die Vorspannkraft der Ausbiegungen 15 in der Federscheibe 11 erreicht wird.

Um die PTC-Elemente 10 mit elektrischer Spannung zu versorgen, sind an die Kontaktplatten 8 und 9 elektrische Buchsenkontakte 16 angeformt. Zu diesem Zweck sind Randbereiche der Kontaktplatten 8 und 9 ausgeschnitten und zu Buchsenkontakten 16 gerollt. Die Buchsenkontakte 16 sind also aus dem Material der Kontaktplatten 8 bzw. 9 geformt. Zum Einsatz in die Buchsenkontakte 16 dienen zylindrische Stiftkontakte 17, die eine Mittelrippe 18 aufweisen, mit denen sie in den Mittelteil 7 des Gehäuses 1 eingesetzt, beispielsweise eingepreßt oder eingeleimt, sind. Nach außen ragen die Stiftkontakte 17 mit stiftförmigen Anschlußkontaktenden 19 heraus.

Im folgenden wird die Wirkungsweise der Heizeinrichtung und des damit integrierten Filters näher beschrieben. Durch die Kraftstoffzuleitung 4 gelangt Dieseltreibstoff in den Deckel 6 der Heizeinrichtung und fließt durch eine Durchlaßöffnung 20 in der Deckfläche 21 des Mittelteils 7 in den Bereich der Heizeinrichtung. Er gelangt somit an die Außenfläche der oberen Kontaktplatte 8 und umströmt diese, bis er zu einer in der oberen Kontaktplatte 8 befindlichen Durchlaßöffnung 21 gelangt. Durch diese Durchlaßöffnung 21 erreicht der Kraftstoff den Raum zwischen den beiden Kontaktplatten 8 und 9 und umströmt dabei die PTC-Elemente 10. Der Raum neben dem Buchsenkontakt 16 der unteren Kontaktplatte 9 dient als weitere Durchlaßöffnung für den Kraftstoff zum Bereich der Federscheibe 11, den der Kraftstoff durch die Öffnungen 22 die durch die Ausbiegungen 15 entstanden sind, durchsetzt. Daraufhin gelangt der Kraftstoff in die Filterpatrone 2, die er durch entsprechend ausgebildete Öffnungen 23 durchsetzt, um in einen Mittelkanal 24 zu gelangen, in der der Kraftstoffauslaß 5 endet.

Beim Starten des Motors, der an diese Heiz-Filter-Einrichtung angeschlossen ist, wird gleichzeitig Spannung an die PTC-Elemente 10 angelegt. Diese erwärmen in wenigen Sekunden den im Bereich der Heizeinrichtung befindlichen Kraftstoff auf eine Temperatur, die es ihm erlaubt, durch die Filterpatrone 2 zu treten. Dabei wird zunächst nur der obere, von warmem Kraftstoff erreichte Bereich der Filterpatrone 2 von Kraftstoff durchflossen, der auf kurzem Weg den Kraftstoffauslaß erreicht und zum Motor gelangt. Kritisch für kalten Kraftstoff ist nur der Bereich der Filterpatrone, der den Durchfluß von kaltem Kraftstoff behindert. Die weiter unten liegenden Bereiche der Filterpatrone werden im Betrieb des Motors nach und nach aufgeheizt, um ihre volle Funktionsfähigkeit im Laufe des Betriebs zu erhalten.

Die beiden Kontaktplatten 8 und 9 bestehen in dem dargestellten Ausführungsbeispiel aus Aluminium bzw. einer Aluminiumlegierung, die selbst eine relativ geringe Wärmekapazität aufweist und einen ausgezeichneten Wärmeleitwert besitzt. Die Federscheibe 11 besteht aus Federstahl. Die PTC-Elemente sind von üblicher Bauart und besitzen eine Dicke von 1 bis 2 mm. Der Mittelteil des Gehäuses besteht aus Kunststoff, vorzugsweise Polyäthylen, in das die beiden Stiftkontakte 17 mit gutem mechanischen Kontakt einbettbar sind.

**Patentansprüche**

1. Heizeinrichtung für den Dieselkraftstoff eines Verbrennungsmotors, mit in einem Gehäuse (1) angeordneten ringförmigen, der Wärmeübertragung dienenden Kontaktplatten (8, 9), zwischen denen mehrere scheibenförmige PTC-Elemente (10) angeordnet und durch eine Federeinrichtung (11) in Anlage an den Kontaktplatten (8, 9) gehalten sind, dadurch gekennzeichnet, daß die PTC-Elemente (10) mit einem Mittelloch (10a) ausgebildet sind, daß die Kontaktplatten (8, 9) mit entsprechenden Durchbrüchen (8a, 9a) versehen sind, daß das Gehäuse (1) Haltestifte (13) aufweist, welche die Mittellöcher (10a) der PTC-Elemente (10) und die Durchbrüche (8a, 9a) in den Kontaktplatten (8, 9) durchdringen, und daß die Federeinrichtung (11) an der den PTC-Elementen (10) abgekehrten Seite einer (9) der Kontaktplatten angeordnet ist und durch die Haltestifte (13) positioniert und fixiert ist.

2. Heizeinrichtung nach Anspruch 1, dadurch gekennzeichnet, daß die Kontaktplatten (8, 9) in ihren Randbereichen eingeschnitten sind und in diesem Bereich elektrische Kontakte (16) unmittelbar aus dem Material der Kontaktplatten (8, 9) geformt sind.

3. Heizeinrichtung nach Anspruch 2, dadurch gekennzeichnet, daß die elektrischen Kontakte als Buchsenkontakte (16) ausgebildet sind, und daß entsprechende Stiftkontakte (17) in das angrenzende Gehäuse (1) eingebettet sind, die mit Anschlußkontaktenden (19) aus dem Gehäuse (1) herausragen.

4. Heizeinrichtung nach einem der Ansprüche 1 bis 3, dadurch gekennzeichnet, daß die Federeinrichtung (11) als Federplatte ausgebildet ist, die den Haltestift (13) umgreift und wenigstens zwei federnde Ausbiegungen (15) aufweist, mit denen sie sich an der Kontaktplatte (9) abstützt.

5. Heizeinrichtung nach Anspruch 4, dadurch gekennzeichnet, daß die Federeinrichtung als für alle PTC-Elemente (10) gemeinsame Federscheibe (11) ausgebildet ist, die eine der Zahl der PTC-Elemente (10) entsprechende Anzahl von Öffnungen (11a) mit dazu benachbarten Ausbiegungen (15) aufweist.

6. Heizeinrichtung nach einem der Ansprüche 1 bis 5, dadurch gekennzeichnet, daß zur gemeinsamen Lagerung der Kontaktplatten (8, 9), der PTC-Elemente (10) und der Federeinrichtung (11) Schrauben (14) vorgesehen sind, die in die Haltestifte (13) eingesetzt sind.

**Claims**

1. A heating device for the diesel fuel of an internal combustion engine, having annular contact plates (8, 9) which are disposed in a housing (1) and serve for the transmission of heat and between which a plurality of disc-shaped PTC elements (10) are disposed and held bearing against the contact plates (8, 9) by a spring device (11), characterised in that the PTC elements (10) are formed with a centre hole (10a), that the contact plates (8, 9) are provided with corresponding apertures (8a, 9a), that the housing (1) comprises retention pins (13) which penetrate through the centre holes (10a) in the PTC elements (10) and the apertures (8a, 9a) in the contact plates (8, 9) and that the spring device (11) is disposed at the side of one of the contact plates remote from the PTC elements and is positioned and located by the retention pins (13).

2. A heating device as claimed in Claim 1, characterised in that the contact plates (8, 9) are incised in their marginal regions and in this region, electrical contacts (16) are formed directly from the material of the contact plates (8, 9).

3. A heating device as claimed in Claim 2, characterised in that the electrical contacts are constructed in the form of socket contacts (16) and that corresponding pin contacts (17) are embedded in the adjacent housing (1) and provided with connecting-contact ends (19) projecting from the housing (1).

4. A heating device as claimed in any one of Claims 1 to 3, characterised in that the spring device (11) is constructed in the form of a spring plate which engages round the retention pins (13) and comprises at least two resilient bent-out portions (15) with which it is supported on the contact plate (9).

5. A heating device as claimed in Claim 4, characterised in that the spring device is constructed in the form of a common spring plate (11) for all the PTC elements (10) and comprises a number of openings (11a) with adjacent bent-out portions (15) corresponding to the number of PTC elements (10).

6. A heating device as claimed in any one of Claims 1 to 5, characterised in that screws (14), which are inserted in the retention pins (13), are provided for mounting collectively the contact plates (8, 9), the PTC elements (10) and the spring device (11).

**Revendications**

1. Réchauffeur pour le carburant Diesel d'un moteur à combustion interne, comportant des plaques de contact (8, 9) de forme annulaire, qui sont disposées dans un carter (1), qui servent à transmettre la chaleur et entre lesquelles plusieurs éléments PTC (à coefficient de température positif) (10) en forme de disque sont disposés et maintenus en appui contre les plaques de contact (8, 9) par un dispositif à ressorts (11), caractérisé en ce que les éléments PTC (10) sont conçus avec un trou axial (10a) ; en ce que les plaques de contact (8, 9) présentent des découpes traversantes appropriées (8a, 9a) ; en ce que le carter (1) présente des tétons d'arrêt (13) qui passent à travers les trous axiaux (10a) des éléments PTC (10) et à travers les découpes (8a, 9a) prévues dans les plaques de contact (8, 9) ; et en ce que le dispositif à ressorts (11) est disposé contre la face, opposée aux éléments (10), de l'une (9) des plaques de contact et en ce qu'il est positionné et fixé par les tétons d'arrêt (13).

2. Réchauffeur selon la revendication 1, caractérisé en ce que les plaques de contact (8, 9) sont découpées dans leurs zones de bordure et en ce que dans cette zone les contacts électriques (16) sont directement formés à partir du matériau et des plaques de contact (8, 9).

3. Réchauffeur selon la revendication 2, caractérisé en ce que les contacts électriques sont conçus sous forme de contacts à douille (16) ; et en ce que des contacts à broche (17) appropriés sont insérés dans le carter voisin (1) et débordent de ce carter (1) par leurs extrémités de contact de raccord (19).

4. Réchauffeur selon l'une des revendications 1 à 3, caractérisé en ce que le dispositif à ressorts (11) est conçu sous forme de plaques à ressorts qui enserrent le téton d'arrêt (13) et présente au moins deux rabats élastiques (15) par lesquels il s'appuie contre la plaque de contact (9).

5. Réchauffeur selon la revendication 4, caractérisé en ce que le dispositif à ressorts est conçu sous forme d'un disque à ressorts (11) qui est commun pour tous les éléments PTC (10) et qui présente un nombre d'ouvertures (11a) correspondant au nombre des éléments PTC (10) avec des rabats (15) voisins des ouvertures.

6. Réchauffeur selon l'une des revendications 1 à 5, caractérisé en ce que pour tenir ensemble les plaques de contact (8, 9), les éléments PTC (10) et le dispositif à ressorts (11) sont prévues des vis (14) qui sont vissées dans les tétons d'arrêt (13).

Fig.1

Fig. 2

# Fig.5